# EUROPEAN PATENT APPLICATION

(11) **EP 4 811 118 A1**
(43) Date of publication of application: **23.09.2026**
(21) Application number: 25165027.1
(22) Date of filing: 20.03.2025
(51) Int. Cl.: G06F 8/60, G06F 9/455

(54) **METHOD FOR DEPLOYING A LOW-LEVEL, MACHINE-PORTABLE BINARY CODE OF A DISTRIBUTED CONTROL SYSTEM (DCS) COMPONENT**

(71) Applicant: ABB SCHWEIZ AG, 5400 Baden (CH)
(72) Inventor: HARK, Rhaban, 64347 Griesheim (DE); KOZIOLEK, Heiko, 76227 Karlsruhe (DE); YUSSUPOV, Vladimir, 68163 Mannheim (DE)
(74) Representative: Maiwald GmbH

(57) **Abstract**

The disclosure relates to a method (100) for deploying low-level, machine-portable binary code of a Distributed Control System, DCS, component on at least one first computing node (21) of an information and communication system (1), the method comprising:
- obtaining (S 101) a source code of a DCS component;
- compiling (S 102) the source code into a low-level, machine-portable binary code; and
- deploying (S 104) the low-level, machine-portable binary code on the at least first computing node (21) in response to a control command transmitted by a control unit of an orchestration system (30).

## Description

### TECHNICAL FIELD

The present invention relates to a method for deploying at least a low-level, machine-portable binary code of a Distributed Control Systems (DCS) component on at least a first computing node of an information and communication system, one or more computer program products, an apparatus, and an information and communication system.

### BACKGROUND

Distributed Control Systems (DCS) are used in industrial applications to facilitate complex control tasks for managing an industrial process through a multitude of software components. Traditionally, these systems consist of a heterogeneous mix of applications developed specifically for different platforms and operating systems. For instance, certain supervisory or monitoring services may only operate under Windows, while programmable logic controllers (PLCs) are compiled for real-time operating systems such as VxWorks. This platform-specific approach creates significant challenges in terms of interoperability, flexibility, and scalability.

Integrating such diverse components into a cohesive system is often a labor-intensive process. Changes or relocations typically require extensive modifications because each component is closely tied to its target platform. Furthermore, the varied technical foundations and interfaces hinder the reuse of components and lead to increased maintenance costs.

Thus, there is a need for a more flexible, platform-independent approach that considers the entire lifecycle of DCS components, from development and compilation to deployment and secure execution, without being constrained by the limitations of specific operating systems or hardware, for example.

### SUMMARY

The above problem or need is at least partially solved or alleviated by the subject matters of the independent claims of the present disclosure, wherein further examples are incorporated in the dependent claims.

According to an aspect of the present disclosure, there is provided a method for deploying low-level, machine-portable binary code of a Distributed Control System, DCS, component on at least one first computing node of an information and communication system, the method comprising:
obtaining a source code of a DCS component,
compiling the source code into a low-level, machine-portable binary code, and
deploying the low-level, machine-portable binary code on the at least first computing node in response to a control command transmitted by a control unit of an orchestration system.

A Distributed Control System (DCS) may be an integrated network-based system used to control industrial processes and operations, for example. Instead of relying on a single centralized controller, a DCS may distribute control functions across multiple interconnected controllers, sensors, and actuators, for example. A DCS component may be a module or software service that is part of a larger control system, used to manage industrial processes, for example. Thus, a DCS component may be any software unit within a distributed control system. This DCS component may handle tasks such as controlling actuators, processing sensor data, or managing communication between devices, for example.

Binary code may be a machine-readable, low-level, machine-portable representation of a software program, e.g., expressed as a sequence of 0s and 1s. It may be generated by compiling high-level source code, for example written in languages such as C, C++, Python, Rust, or similar, into a runtime-dependent format that a processor may directly understand and execute. It may be generated by compiling into natively compiled format that a processor can directly interpret and execute. The source code may be compiled into an intermediate format that is executed by a suitable runtime environment instead of running natively on the processor. The binary code may be in a form of a WebAssembly (WASM) module, a low-level, stack-based format that can be executed by a corresponding WASM runtime environment. Alternatively, the binary code may conform to a WebAssembly Component Model, in which the application is divided into multiple composable subunits (i.e., "components") that can be independently compiled and subsequently integrated, for example. Although WebAssembly may be frequently stored in a binary format, it may also exist in a textual representation that the runtime environment can parse into an executable form. The term binary code is broad enough to encompass either the canonical binary encoding or a textual equivalent with substantially the same execution semantics. Likewise, the concept of binary code here is not strictly limited to WASM. Any comparable intermediate or bytecode format that can be executed by a virtual machine or other runtime layer may fall within the scope. Thus, a runtime-dependent code may be compiled to a platform-neutral representation, ensuring that the compiled artifact can be deployed across diverse hardware or operating systems, provided a suitable runtime environment is available. As such, this binary code may become a deployable form of a DCS component, either natively by the CPU or through a suitable runtime environment, which can be provided to different computing nodes in the DCS for execution.

For example, the source code may be transformed into a WASM module, a standardized, platform-independent binary format that can be executed by any compatible runtime. By compiling the source code into a WebAssembly module, it may be ensured that the executable code is not tied to any specific platform. This may enhance the flexibility and portability of the DCS component across different computing environments. Instead of compiling the source code into a WebAssembly module, the source code could be compiled into a platform-independent textual instruction format, for example. Such a format would then be interpreted by a compatible runtime environment. Other potential alternatives may include using different intermediate representations, such as LLVM Bitcode, Java bytecode, or the .NET Intermediate Language, that are designed to be executed on virtual machines across various platforms, for example.

An information and communication system may refer to an integrated system that includes hardware (such as computing nodes), software, networks, and communication protocols, which together enable the processing, storage, and transmission of data, for example. The DCS may represent a subset of the overall information and communication system, for example.

The step of obtaining the source code of the DCS component may involve acquiring or accessing human-readable instructions, e.g., written in a high-level programming language, that define the functionality and behavior of a specific component within a DCS. The source code may be newly written by developers or retrieved from existing repositories, for example. It may represent an original design and logic for controlling specific industrial processes or functions, such as monitoring sensors, executing control algorithms, or managing communication with field devices, for example.

The source code may be processed, e.g., by a compiler that converts it into binary code, a sequence of machine instructions. However, this binary code may not necessarily be natively tied to a specific CPU architecture or operating system. Instead, the resulting platform-independent binary code can be executed on any computing node that has a corresponding runtime environment, which performs the final step of translating or interpreting the instructions for the underlying hardware.

Because the runtime environment may handle these platform-specific details, the compiled output is effectively an executable binary code without requiring further compilation for each distinct platform. This ensures that the DCS component can be deployed and executed consistently across various systems, such as cloud-native infrastructures, bare-metal systems, or other heterogeneous environments, simply by using a suitable runtime. In other words, by compiling the source code into a platform-independent format, the DCS component becomes both flexible and portable, enabling easy reuse and migration without modification.

Once the binary code is stored in the registry, it may be retrieved and launched on a target computing node. The deployment process may be triggered by a control command, which is transmitted by a control unit that is part of an orchestration system. The orchestration system or orchestrator may refer to a software system or framework that manages the lifecycle of applications, services, or components in a distributed environment, for example. Its responsibilities may include scheduling workloads onto specific nodes, monitoring their status, restarting failed instances, and scaling resources as required. In the context of a Distributed Control System (DCS), the orchestrator may be a platform like Kubernetes (using a Kubelet on each node) or an equivalent system that deploys binary code or containerized components to the target computing nodes, ensuring each module is started, stopped, or updated according to the overall control strategy or operator commands. The orchestration system may manage the allocation and scheduling of resources across a network of computing nodes. This may ensure that the software component is deployed where it is needed. When the control command is issued, the stored binary code may be fetched from the registry and deployed to the designated computing node. Alternatively, the orchestration system may deploy and launch the binary directly on the target computing node.

The method of the first aspect may in particular be an at least partially or fully computer implemented method. This means that at least one, multiple or all of the steps of the method may be carried out by an information and communication system, which may comprise one or more data processing apparatuses, which may be in the form of computers or computing units, which may comprise one or more processors and data storages or memories. Different steps may be carried out by the same or by different data processing apparatuses of the data processing system.

In an example, the compiled low-level, machine-portable binary code from the DCS component may be executed as an independent process on the at least first computing node. Instead of executing the entire binary code as a single, monolithic process, the compiled binary code may be launched as multiple independent processes on the computing node, each representing a distinct service or subcomponent of the DCS logic. This multi-process approach may enhance scalability, fault isolation, and resource allocation, as individual services can be independently started, stopped, or updated, for example.

Alternatively, the DCS component may be executed as a single process that spawns multiple threads for concurrency, for example. As a further variation, each DCS component may be deployed as a separate container, for instance, a Docker container, or as an independent microservice within an orchestration framework. Such containerized deployment may offer standardized interfaces, portable packaging, and sophisticated scheduling mechanisms, further benefiting large-scale distributed environments. Regardless of the chosen strategy, the compiled binary code may remain platform-independent, relying on a suitable runtime environment or virtual machine to handle the final translation to hardware instructions. For example, if the code may be generated in a WebAssembly (WASM) format or another intermediate bytecode, each instance may run in its own sandboxed environment.

In an example, the runtime environment may be implemented as a virtual machine. This may mean that the low-level, machine-portable binary code may be executed on the at least one first computing node within a runtime environment that is implemented as a virtual machine, for example. A virtual machine (VM) may refer to an execution environment in which instructions primarily operate on an implicit stack rather than on explicit registers or direct memory addresses. In other words, operands may be pushed onto the stack before an instruction is called, and results are popped from that same stack upon completion of the operation. The VM or bytecode processor may operate on an implicit stack, where operands are pushed and popped for each instruction, rather than relying on explicit registers or direct memory addressing. Alternatively, a register-based design could be used, where a set of virtual registers manages operands instead of an implicit stack. Such an architecture may offer several advantages in the context of deploying control logic. For example, because the VM's instruction set is designed around push/pop operations rather than CPU-specific registers, the compiled binary code may not assume any particular hardware architecture. This may facilitate portability across different computing nodes or operating systems, provided each node runs a compatible stack-based VM. A stack-based design may lend itself well to bounds checking and verification, since instructions reference the top of the stack rather than arbitrary memory locations. This structure may simplify the isolation of running code and reduce the risk of unauthorized access to system resources, which is especially relevant in distributed control environments, for example. Thus, by utilizing a stack-based VM, it may be ensured that any control logic deployed through this process remains runtime-dependent and platform-neutral.

In an example, the method may further comprise encapsulating the low-level, machine-portable binary code together with a runtime environment into a container, wherein the container is configured to execute the low-level, machine-portable binary code. This may mean that after the source code is compiled into a binary format, such as a WASM module, the binary code may not simply be stored on its own. Instead, it may be encapsuled with a runtime environment, software that provides the necessary infrastructure to execute the binary, into a single container, for example. The container may be configured to execute the binary code, ensuring that all dependencies and settings are pre-packaged. This compiling may simplify deployment, as the container can be moved and executed across different computing nodes without the need for additional configuration or separate runtime installations, for example. Instead of encapsulating the binary code with its runtime environment into a container, the compiled binary code may be directly deployed onto a computing node that already includes a compatible runtime. As an alternative to containerization, the binary code may be packaged together with the runtime environment into a virtual machine (VM) image, for example. This VM image may then be deployed on a computing node, for example.

In an example, the method may further comprise storing the low-level, machine-portable binary code in a storage unit. The compiled, platform-independent binary code may be optionally stored into a dedicated storage repository, or registry unit. This registry may act as a central archive where the binary code is persistently stored, version-controlled, and made available for later retrieval, for example. The registry unit may be compliant with standards (for example, OCI-compliant container registries) and facilitate the distribution and management of software artifacts across different environments. For example, the compiled binary code may be packaged as an OCI-compliant container image, which may or may not include the corresponding runtime environment. For instance, if the target deployment node already has a suitable runtime installed, the container might only contain the binary code plus minimal configuration layers. Conversely, if the node does not provide the runtime, the container may incorporate both the binary code and the runtime environment, effectively bundling everything needed to execute the code.

Regardless of the specific packaging strategy, storing the container in an Open Container Initiative (OCI)-compliant container registry may allow the binary code (and optionally its runtime) to be managed via standardized interfaces, for example. This approach may mirror how traditional application containers, e.g., Docker images, are stored and retrieved, enabling consistent version control, distribution, and orchestration integration. Further, such a container may simply be a thin image wrapping the binary code itself, or a more comprehensive image including a full runtime stack, for example.

The OCI compliance may ensure broad compatibility with orchestration tools (e.g., Kubernetes), making it straightforward to schedule and deploy the container onto various nodes.

Alternatively, the binary code may be stored in a proprietary or custom registry that provides similar versioning and retrieval functionalities. A distributed storage system or cloud-based image repository may be another option. Thus, the term "container" in this context may encompasses any OCI-style image format or comparable packaging method by which the binary code, and possibly its runtime, can be encapsulated, versioned, and delivered to the target environment for execution.

In an example, the control unit may be part of an orchestration system comprising a Kubernetes cluster. The orchestration system may use Kubernetes e.g., to manage the lifecycle of containerized applications. This may include scheduling deployments, handling failures, and ensuring resource allocation across nodes, for example. The orchestration system is limited to the usage of Kubernetes cluster. Alternatively, other orchestration frameworks (such as TOSCA or other similar systems) that provide comparable functionalities may be utilized.

In an example, the at least one first computing node may comprise a container runtime environment and a Kubelet configured to receive and execute the deployed low-level, machine-portable binary code. The computing node may comprise a container runtime, such as Docker or containerd, that is responsible for launching and managing containerized applications, for example. The node may also run a Kubelet, which is the agent that communicates with the Kubernetes control plane. The Kubelet may receive deployment commands and monitors the state of the containers on the node, for example. The Kubelet may ensures that the deployed binary code is running as specified by the orchestration system, for example. However, instead of using a Kubelet, the computing node may utilize a different node agent compatible with another orchestration framework.

However, if the binary code is in another format, e.g., a WASM format or another runtime-dependent intermediate representation, a specialized container runtime may be required to handle such binaries. For example, the container runtime may be extended or replaced with a WASM-compatible layer (e.g., a WASM shim or plugin) that can interpret or JIT-compile the WASM instructions. In this way, the Kubelet may still manage the scheduling and lifecycle, but the underlying runtime environment must support non-native binaries. Alternatively, if another orchestration framework may be employed, the computing node may rely on a different node agent fulfilling the same role, namely, receiving control-plane instructions and launching workloads with the appropriate runtime support for WASM or comparable bytecode formats, for example.

In an example, the method may further comprise executing the deployed low-level, machine-portable binary code within a sandbox environment provided by the container runtime environment. A sandbox environment may refer to an isolated execution space that may limit the binary code's access to system resources, such as file systems, network interfaces, or device drivers, unless explicitly permitted. By running the binary code in this sandbox, the execution of the binary code may be effectively shielded from the host system's core processes, thereby mitigating the risk that a malfunctioning or malicious component could disrupt or compromise the broader system.

Where the container runtime environment implements a WebAssembly (WASM) runtime, the sandboxing may be inherent, as WASM's instruction set architecture already confines operations to a restricted memory space and disallows arbitrary system calls by default. Additional layers of resource control, e.g., CPU, memory, disk I/O quotas, may still be enforced by the container infrastructure. In some embodiments, further security modules, such as but not limited to AppArmor, SELinux, or Seccomp, may be employed alongside the built-in sandbox to impose mandatory access control policies or restrict certain system calls, providing an additional layer of defense.

Alternatively, if the underlying container runtime does not natively support WASM or similar bytecode, a separate, specialized sandbox runtime may be introduced to host the binary code. This may ensure the same isolation benefits

In an example, the DCS component may be implemented as a cross-platform module configured to interoperate with other DCS components via standardized interfaces. The DCS component may be designed to run on different operating systems or hardware platforms without requiring changes to its underlying code. Therefore, the DCS component may be built in a modular way, meaning it can be easily integrated with other components within the same distributed control system, for example. Moreover, these DCS modules may be configured to interoperate via standardized interfaces. This may mean that the communication between different DCS components is governed by well-defined protocols or interface specifications, such as those defined by the WebAssembly Component Model or similar standards. These standardized interfaces may ensure that each component can exchange data, signals, or commands with other components seamlessly, regardless of the specific implementation details of each module, for example. Instead of using standardized interfaces (e.g., those defined by the WASM Component Model), the DCS component may be designed to interoperate using proprietary or domain-specific interfaces, for example. Another variant may involve dynamically configuring the interfaces at runtime instead of relying on statically defined interfaces, for example.

In an example, the method may further comprise monitoring the execution of the deployed low-level, machine-portable binary code on the at least one first computing node and transmitting performance data to the control unit for adaptive deployment management. The running binary code may be continuously observed to capture performance data. This may include CPU and memory usage, network latency, and other operational parameters. The collected performance data may be sent to the control unit, which may act as a decision-maker in managing deployments, for example.

This may include CPU and memory usage, network latency, and other operational parameters. Based on the performance data, the control unit may adjust deployment parameters in real time, for example. This adaptive management may involve scaling resources up or down, rescheduling workloads, or modifying configuration parameters to ensure optimal performance and reliability of the system. For example, if a node is overloaded, the control unit might initiate scaling up by deploying additional instances or shifting workloads to less busy nodes.

In an example, the method may further comprise modularly composing a plurality of low-level, machine-portable binary codes. Each may represent a different DCS component (e.g., a sensor controller, an actuator interface, or a process visualization service). Rather than being limited to a single component, multiple independent modules, e.g., each compiled into a platform-independent format, may be combined to form a larger system. These modules may be configured to interoperate through standardized interfaces, for instance as defined by a WebAssembly (WASM) Component Model, where each binary code may conform to one or more WebAssembly Interface Type (WIT) definitions specifying how the modules communicate and interact. Because each DCS component may be developed, compiled, and updated independently, it can later be integrated into a broader control platform without reengineering the entire system. While WIT definitions may serve as one concrete example of a standardized interface specification, alternative definitions or models offering comparable interoperability could likewise be employed.

In an example, the method may further comprise dynamically configuring communication endpoints of the deployed binary code based on the current network conditions or configuration parameters provided by the orchestration system. This may mean that the communication interfaces, i.e., the "inputs" and "outputs" for data exchange, of the deployed binary code may not be statically defined but may be automatically configured at runtime, for example. This may mean, rather than assigning static, hardcoded endpoints, the binary code may automatically adjust its communication parameters (e.g., IP addresses, ports, or protocol details) at runtime, for example. After deployment, it may be determined which other DCS components are available for communication, for example. Communication endpoints, such as network addresses, ports, or service IDs, may be dynamically set or adjusted based on the current network conditions or configuration parameters provided by the orchestration system (e.g., Kubernetes). This may allow to adapt to changes such as network congestion, node reassignments, or the addition or removal of components. For example, in a Kubernetes-like environment, the environment variables or configuration objects may be updated (e.g., ConfigMaps, Service Discovery APIs) that the binary code uses to determine where and how to connect. Thus, the binary code may expose an interface that allows its communication layer to be reconfigured without stopping or redeploying the component. The dynamic configuration may ensure that the binary code always uses the correct and up-to-date communication parameters, for example.

According to a second aspect of this disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect, an apparatus for deploying at least a low-level, machine-portable binary code of a DCS component on at least a first computing node of an information and communication system, is proposed. The apparatus comprises:
- a receiving unit configured to obtain a source code of the DCS component,
- a compiling unit configured to compile the obtained source code into a binary code, and
- a deploying unit configured to deploy the stored binary code on the at least one first computing node in response to a control command transmitted by a control unit of an orchestration system.

The receiving unit may be responsible for receiving the provided source code of the DCS component. It may interface with a repository or directly with a developer, ensuring that the correct source code is obtained for further processing, for example.

The compiling unit may compile the obtained source code into a platform-independent, executable binary code (for example, a WebAssembly (WASM) module).

A storage unit may serve as a repository for the compiled binary code. In one embodiment, the storage unit may be implemented as a registry, such as an OCI-compliant registry, which provides version control, easy retrieval, and consistent management of container images or platform-independent binaries. This may ensure that once the compiling unit has generated the executable code, it can be securely stored, tracked, and later retrieved by the deploying unit when the orchestration system issues a control command.

The deploying unit may be responsible for deploying the binary code (or container) onto at least one first computing node. Deployment may be triggered by a control command issued by the control unit of an orchestration system (such as a Kubernetes cluster), for example. The deploying unit may ensure that the binary code is correctly delivered and launched on the target node, for example.

Optionally, a network interface may be included to facilitate communication between the apparatus and external systems, e.g., for receiving control commands or transmitting status information. Additional components may be integrated for monitoring the status and performance of the deployment, which can be used for adaptive management or error handling, for example.

The technical effects and advantages described for the computer-implemented method according to the first aspect apply equally to the apparatus according to the third aspect. Further, embodiments and features described with reference to the computer-implemented method according to the first aspect apply mutatis mutandis to the apparatus according to the third aspect.

The respective unit, e.g., the receiving unit and/or the compiling unit, may be implemented in hardware and/or in software. If said unit is implemented in hardware, it may be embodied as a device, e.g., as a computer or as a processor or as a part of a system, e.g., a computer system. If said unit is implemented in software it may be embodied as a computer program product, as a function, as a routine, as a program code or as an executable object.

The apparatus can include parts of the deployment configurator and the control plane and can be connected with the deployment configurator and the control plane. For example, the receiving and compiling units may include or be connected to components of the deployment configurator that handle the reception and compiling of the provided WebAssembly application. Likewise, the deploying unit may include parts of the control plane responsible for deploying the stored binary code based on a control command from the Kubernetes system's control plane.

According to a fourth aspect, an information andcommunication system, including an apparatus according to the third aspect and a first computing node including a container runtime environment is proposed. This runtime environment is configured to execute the deployed low-level, machine-portable binary code. Execution is triggered by a control command, which is transmitted by the control unit of an orchestration system.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a schematic flowchart of an embodiment of a computer-implemented method for deploying binary code of a DCS component on at least one first computing node of an information and communication system;
Figure 2 shows a schematic block diagram of an apparatus for deploying binary code of a DCS component on at least one first computing node of an information and communication system; and
Figure 3 shows a schematic architecture that illustrates multiple deployment scenarios for Distributed Control System (DCS) components.

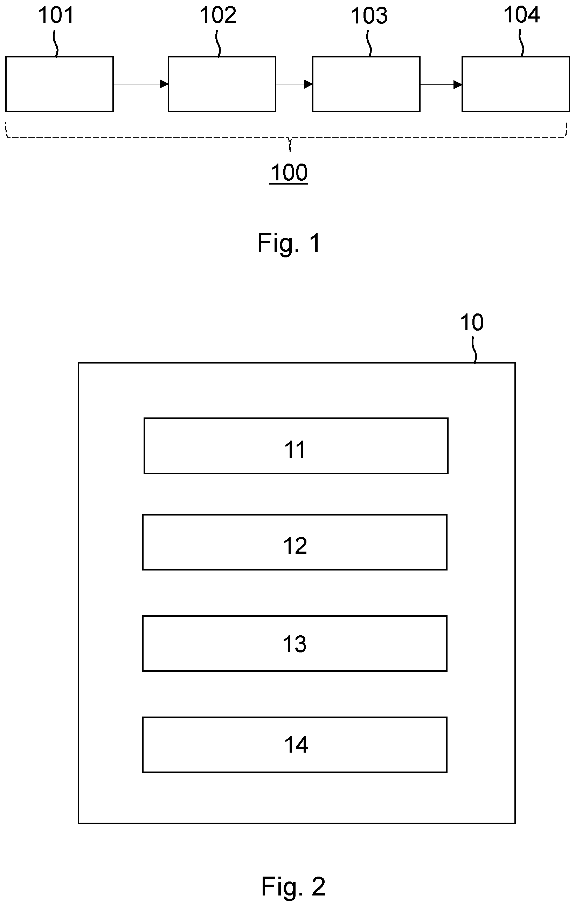

Referring to Figure 1, a schematic flowchart illustrates the steps of a computer-implemented method for deploying binary code of a DCS component onto at least one first computing node within an information and communication system.

In a first step 101, a source code of a DCS component is obtained. This source code, which may be written in a high-level programming language such as C, C++, Python, or Rust, may define the functionality and behavior of the component.

In a next step 102, the source code is compiled into a platform-independent binary format. This may be a WebAssembly (WASM) module. By compiling the source code into a format that is not tied to any specific operating system or hardware architecture, the DCS component may become portable and can run on a wide range of computing nodes that support the corresponding runtime environment.

Once compiled, the resulting binary code is in an optional step 103 stored in a registry unit. In some embodiments, this may be an OCI-compliant container registry, which enables standardized management and version control of the binary artifact. Such an approach may simplify the subsequent deployment process, as different computing nodes can pull the code from a central repository. However, the compiled binary code may be transferred directly to the target computing node without intermediate storage.

In a final step 104, the binary code is deployed on at least one first computing node in response to a control command issued by a control unit of an orchestration system 30. For instance, a Kubernetes cluster may transmit instructions to the target node 21, specifying where and how the binary code is to be executed, for example. For instance, in a container-based approach, the binary code may be packaged together with an appropriate runtime environment, e.g., a WebAssembly runtime or another bytecode interpreter, into an OCI-compliant container image. Kubernetes, through its scheduling mechanism, then may place this container image on the relevant node, where it is executed under the node's container runtime (e.g., Docker or containerd). This approach may leverage standard container tooling and is typically the default paradigm for orchestrated workloads in Kubernetes.

In another example, a bare-metal deployment scenario may assume that the node's 21 operating system already includes or has installed a compatible runtime capable of running the binary code directly, without additional container encapsulation. While Kubernetes (or an alternative orchestrator) may still coordinate lifecycle actions such as start, stop, or update commands, the binary code itself may be launched directly on the host operating system. If the binary code is not managed by Kubernetes at all, it may simply be transferred to the node's operating system (OS) and executed in tandem with other processes, provided the requisite runtime is present, for example. In each scenario, the principle remains that the binary code may be platform-independent and runtime-dependent, requiring an execution environment that can interpret, or just-in-time compile the instructions. If the environment is Kubernetes-based, one may embed both the binary code and its runtime in a container image or, if the runtime is already present at the node level, run the code directly on the host OS. Outside of Kubernetes, the same binary may be deployed manually onto the operating system, so long as a suitable runtime is available. In some variants, additional steps such as configuring the sandbox in which the deployed binary code runs, monitoring its performance, or dynamically configuring communication endpoints may be included.

Figure 2 shows a schematic block diagram of an apparatus 10 for deploying at least one platform-independent, executable binary code of a DCS component onto at least one first computing node in an information and communication system. The apparatus 10 comprises a receiving unit 11, an compiling unit 12, a storage unit 13, and a deploying unit 14. The receiving unit 11 is configured to obtain or access the source code of the DCS component, for instance by retrieving it from a repository or receiving it directly from a development environment. After the source code is obtained, a compiling unit 12 compiles the source code into a platform-independent, executable binary code (for example, a WebAssembly (WASM) module). Optionally, this compiled binary code can be encapsulated together with a suitable runtime environment, such as a WASM runtime, into a container, creating a self-contained artifact that can be deployed in heterogeneous infrastructures.

The resulting binary code (or container) is then handed over to the storage unit 13, which stores it in a registry or another repository, preferably one that supports versioning and secure access, for example, an OCI-compliant container registry. In response to a control command issued by an orchestration system 30, e.g., a Kubernetes cluster, the deploying unit 14 retrieves the stored binary code (or container) and deploys it on the designated computing node 21. This may involve transmitting the container to the target node 21, verifying its integrity, and initiating its execution in the appropriate runtime environment.

Each of the units (11, 12, 13, 14) may be implemented in hardware, in software, or in a combination thereof, and may be integrated with or connected to a control plane of the orchestration system.

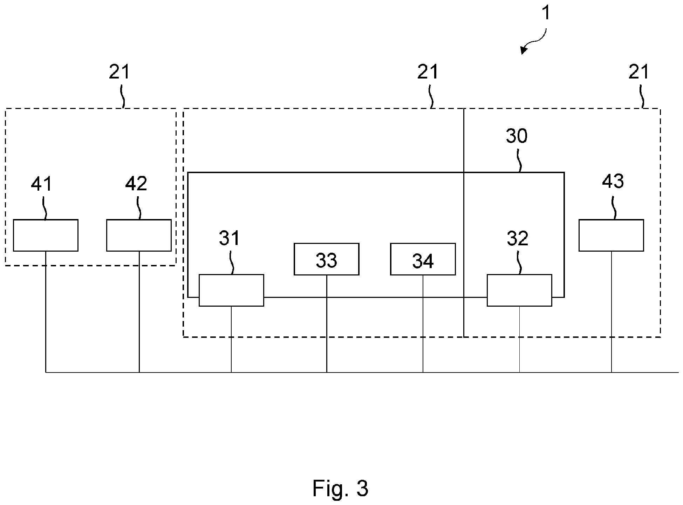

Referring to Figure 3, a schematic architecture is shown that illustrates an information and communication system 1 comprising multiple deployment scenarios for Distributed Control System (DCS) components using a platform-independent binary format, exemplarily WebAssembly (WASM), and various runtime environments. The hardware nodes 21 on which these components run may be either physical or virtual machines.

An apparatus 10as shown in Fig. 2 is part of the information and communication system 1 and may be realized as a device or as a combination of software and optionally hardware. It may handle the pipeline from obtaining the DCS component's code through to compiling, storage, and final deployment onto a target node, for example. Some or all of its functionalities may be co-located with the Kubernetes cluster or spread across various back-end services that prepare and manage the artifacts (e.g., container images, WASM binaries).

In one deployment mode, shown on the left, two bare-metal deployments (41, 42) are depicted. A Fieldbus Interface component 41 translates legacy fieldbus signals into a standardized protocol such as OPC UA, executing directly on a hardware node equipped with a WASM runtime. Likewise, a Programmable Logic Controller (PLC) 42 runs on a bare-metal node where a WASM runtime is installed. These bare-metal deployments illustrate that platform-independent binaries may be executed without containerization if the underlying hardware already provides a compatible runtime.

In the central portion of the figure, an orchestration system 30, or a Kubernetes cluster is depicted, orchestrating several DCS components. An OPC UA Global Discovery Server (GDS) 31 is deployed as a WASM binary on a Kubernetes-managed node that offers a WASM runtime at the bare-metal level. Another PLC 32 is similarly managed by Kubernetes and executes in a WASM runtime on a node controlled by the cluster. In addition, a Historian 33 and a Process Graphics application 34 are each bundled with a WASM runtime in a container. These containers are then e.g., deployed into Kubernetes, ensuring that each component includes its own runtime environment, thereby facilitating portability and providing standardized sandboxing.

On the right, a legacy control component 43 is shown operating outside the WASM-based or container-based framework. While it remains part of the overall system, it is neither compiled nor deployed as a WASM binary. This example highlights how existing, non-WASM-based services can coexist alongside newly introduced platform-independent modules, enabling an incremental migration to the new deployment model.

Each module (31-34, 41-43) represents a DCS component that may be developed in a higher-level programming language, compiled into a WASM binary (or similar platform-independent format), and then deployed either directly on a hardware node 21 with a WASM runtime or within a container orchestrated by Kubernetes 30.

Communication among these components may rely on industrial protocols (e.g., OPC UA), with the WASM runtime providing a default sandboxing mechanism to restrict access to critical system resources unless explicitly granted, for example. This architecture thus may enable flexible, secure, and scalable deployment of DCS components across heterogeneous environments.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

## Claims

1. Computer-implemented method (100) for deploying low-level, machine-portable binary code of a Distributed Control System, DCS, component on at least one first computing node (21) of an information and communication system (1), the method comprising:
- obtaining (S 101) a source code of a DCS component;
- compiling (S 102) the source code into a low-level, machine-portable binary code binary code; and
- deploying (S 104) the low-level, machine-portable binary code binary code on the at least first computing node (21) in response to a control command transmitted by a control unit of an orchestration system (30).

2. **The** method (100) according to claim 1, wherein the compiled low-level, machine-portable binary code from the DCS component is executed as independent processes on the at least first computing node (21).

3. **The** method (100) according to claim 1 or 2, wherein the runtime environment is implemented as a virtual machine.

4. **The** method (100) according to any of the preceding claims, further comprising encapsulating the low-level, machine-portable binary code together with a runtime environment into a container, wherein the container is configured to execute the binary code.

5. **The** method (100) according to any of the preceding claims, wherein the method comprises storing the low-level, machine-portable binary code in a storage unit (13).

6. **The** method (100) according to any of the preceding claims, wherein the control unit is part of an orchestration system (30) comprising a Kubernetes cluster.

7. **The** method (100) according to any of the preceding claims, wherein the at least one first computing node (21) comprises a container runtime environment and a Kubelet cluster configured to receive and execute the deployed low-level, machine-portable binary code.

8. **The** method (100) according to any of the preceding claims, further comprising executing the deployed low-level, machine-portable binary code within a sandbox environment provided by the container runtime environment.

9. **The** method (100) according to any of the preceding claims, wherein the DCS component is implemented as a cross-platform module configured to interoperate with other DCS components via standardized interfaces.

10. **The** method (100) according to any of the preceding claims, further comprising monitoring the execution of the deployed low-level, machine-portable binary code on the at least one first computing node (21) and transmitting performance data to the control unit for adaptive deployment management.

11. **The** method (100) according to any of the preceding claims, further comprising modularly composing a plurality of low-level, machine-portable binary codes.

12. **The** method (100) according to any of the preceding claims, further comprising dynamically configuring communication endpoints of the deployed low-level, machine-portable binary code based on the current network conditions or configuration parameters provided by the orchestration system.

13. One or more computer program products comprising instructions which, when executed by one or more data processing apparatuses, cause the one or more data processing apparatuses to carry out the method (100) of any one of the previous claims.

14. Apparatus (10) for deploying at least a low-level, machine-portable binary code of a DCS component on at least a first computing node of an information and communication system (1), the apparatus (10) comprising:
- a receiving unit (11) configured to obtain a source code of the DCS component,
- a compiling unit (12) configured to compile the obtained source code into a binary code, and
- a deploying unit (14) configured to deploy the low-level, machine-portable binary code on the at least one first computing node (21) in response to a control command transmitted by a control unit of an orchestration system.

15. Information and communication system, comprising an apparatus (10) according to claim 14 and at least one first computing node (21) including a container runtime environment, wherein the container runtime environment is configured to execute, in response to a control command transmitted by a control unit of an orchestration system, the deployed low-level, machine-portable binary code on the first computing node (21).
